# EUROPEAN PATENT APPLICATION

(11) **EP 4 491 753 A1**
(43) Date of publication of application: **15.01.2025**
(21) Application number: 22931013.1
(22) Date of filing: 11.11.2022
(51) Int. Cl.: C22C 23/02, B22D 21/04, C22C 1/02, C22C 23/00

(54) **MAGNESIUM-LITHIUM-ALUMINUM BASED ALLOY, PRODUCTION METHOD THEREFOR, AND PRODUCTION METHOD FOR MOLDED ARTICLE COMPRISING MAGNESIUM-LITHIUM-ALUMINUM BASED ALLOY**

(30) Priority: 11.03.2022 JP 2022037759
(71) Applicant: The Japan Steel Works, Ltd., Tokyo 141-0032 (JP)
(72) Inventor: YAMAGUCHI, Takeshi, Tokyo 141-0032 (JP); KAWABE, Chikara, Tokyo 141-0032 (JP)
(74) Representative: Simmons & Simmons LLP (Munich)
(86) International application number: PCT/JP2022/042043
(87) International publication number: WO 2023/171041

(57) **Abstract**

The present invention makes it possible to provide, via an industrially stable process, a lightweight magnesium alloy having excellent mechanical properties. Provided is a magnesium-lithium-aluminum based alloy comprising magnesium, 2-6.0 mass% lithium, and 5-10 mass% aluminum. Also provided are: a production method for the magnesium-lithium-aluminum based alloy in which two types of raw material chips containing prescribed elements are prepared and mixed; and a production method for a molded article in which a magnesium-lithium-aluminum based alloy obtained by the above production method is injection-molded.

## Description

### TECHNICAL FIELD

The present invention relates to a magnesium-lithium-aluminum based alloy, a method of manufacturing the same, and a method of manufacturing a molded product made of the magnesium-lithium-aluminum based alloy.

### BACKGROUND ART

Magnesium alloy is one of the lightest metals among practicable metals. In order to achieve more lightweight, various lithium-containing magnesium alloys to which lithium, which has a light specific gravity, is added have been studied and developed.

As such lithium-containing magnesium alloys, for example, a magnesium alloy with high lithium content that contains lithium of 10.5 mass% or more, a Mg-Li-Al-Zn based alloy containing aluminum and zinc in addition to lithium and others are known (see, for example, Patent Document 1).

### RELATED ART DOCUMENT

### PATENT DOCUMENT

Patent Document 1: Japanese Patent No. 6408037

### SUMMARY OF THE INVENTION

### PROBLEMS TO BE SOLVED BY THE INVENTION

In such a lightweight magnesium-lithium based alloy (Mg-Li based alloy) and a magnesium-lithium-aluminum based alloy (Mg-Li-Al based alloy), an alloy that contains a large amount of lithium and is crystallized as body-centered cubic crystals (bcc) have been developed from the viewpoint of improving the poor plastic workability of magnesium having a hexagonal close-packed (hcp) crystal structure as well as achieving low specific gravity by containing a large amount of lithium which has a light specific gravity.

That is, the Mg-Li based alloy forms a simple eutectic phase diagram. When lithium of about 5.7 mass% or more is added to magnesium, the solid solution β-phase of lithium is crystallized out along with the solid solution α-phase of magnesium. When lithium of about 8.5 mass% or more is added thereto, the β-phase is formed as a single phase. While magnesium is generally inferior in cold workability to some extent because of having the hcp structure, lithium can be expected to improve the plastic workability when being crystallized because of having the bcc structure.

However, the larger the lithium content is, the lower the Young's modulus tends to be. The metal product needs to be thickened as much as the decrease in the Young's modulus when being designed in terms of rigidity. Even the achievement of the lightweight in the specific gravity because of the addition of the lithium may cancel the weight reduction effect of the metal product because of the increase in the thickness.

An object of the present invention is to solve the problems of the magnesium alloy as described above, and to make it possible to provide the lightweight magnesium alloy with excellent mechanical properties in an industrially stable process.

### MEANS FOR SOLVING THE PROBLEMS

A magnesium-lithium-aluminum based alloy according to one embodiment of the present invention contains magnesium, lithium of 2 to 6.0 mass%, and aluminum of 5 to 10 mass%.

A method of manufacturing a magnesium-lithium-aluminum based alloy according to one embodiment of the present invention includes a step of preparing a first raw material chip made of a magnesium-aluminum based alloy containing magnesium, aluminum of 5 to 10 mass%, and zinc of 0 to 1 mass%, and a second raw material chip made of a magnesium-lithium based alloy containing magnesium and lithium, and a step of mixing (blending) these raw material chips to obtain the magnesium-lithium-aluminum based alloy.

A method of manufacturing a magnesium-lithium-aluminum based alloy according to another embodiment of the present invention includes a step of preparing a third raw material chip made of a magnesium-lithium-aluminum based alloy containing magnesium, lithium, and aluminum, and having a ratio between lithium content and aluminum content (Li/Al) to be smaller than 8, and a fourth raw material chip made of a magnesium alloy containing no lithium, and a step of mixing these raw material chips to obtain the magnesium-lithium-aluminum based alloy.

A method of manufacturing a molded product made of a magnesium-lithium-aluminum based alloy according to one embodiment of the present invention includes a step of preparing a first raw material chip made of a magnesium-aluminum based alloy containing magnesium, aluminum of 5 to 10 mass%, and zinc of 0 to 1 mass%, and a second raw material chip made of a magnesium-lithium based alloy containing magnesium and lithium, and a step of mixing these raw material chips to obtain the magnesium-lithium-aluminum based alloy. Furthermore, the obtained magnesium-lithium-aluminum based alloy is injection-molded to obtain the molded product.

A method of manufacturing a molded product made of a magnesium-lithium-aluminum based alloy according to another embodiment of the present invention includes a step of preparing a third raw material chip made of a magnesium-lithium-aluminum based alloy containing magnesium, lithium, and aluminum, and having a ratio between lithium content and aluminum content (Li/Al) to be smaller than 8, and a fourth raw material chip made of a magnesium alloy containing no lithium, and a step of mixing these raw material chips to obtain the magnesium-lithium-aluminum based alloy. Furthermore, the obtained magnesium-lithium-aluminum based alloy is injection-molded to obtain the molded product.

### EFFECTS OF THE INVENTION

By the magnesium-lithium-aluminum based alloy and the method of manufacturing the same according to one embodiment of the present invention, a lightweight magnesium alloy with excellent mechanical properties can be provided.

Also, by the method of manufacturing the molded product made of the magnesium-lithium-aluminum based alloy according to one embodiment of the present invention, a molded product made of a lightweight magnesium alloy with excellent mechanical properties can be provided in an industrially stable process.

### BRIEF DESCRIPTIONS OF THE DRAWINGS

[FIG. 1] is a graph showing tensile strength data in a working example and a comparative example;
[FIG. 2] is a graph showing fracture elongation data in a working example and a comparative example;
[FIG. 3] is a graph showing proof stress data in a working example and a comparative example;
[FIG. 4] is a graph showing Young's modulus data in a working example and a comparative example;
[FIG. 5] is a graph showing corrosion resistance data in a working example and a comparative example; and
[FIG. 6] is a graph showing diffraction patterns provided by XRD in a working example and a comparative example.

### DETAILED DESCRIPTION OF PREFERRED EMBODIMENTS

A magnesium-lithium-aluminum based alloy, a method of manufacturing the same, and a method of manufacturing a molded product made of the magnesium-lithium-aluminum based alloy according to the present invention will be explained below with reference to one embodiment.

### [Magnesium-Lithium-Aluminum Based Alloy]

The magnesium-lithium-aluminum based alloy according to one embodiment of the present invention is a magnesium alloy containing magnesium (Mg) as a main component, and also containing lithium (Li) and aluminum (Al) of predetermined amounts.

### (Lithium)

As publicly known, lithium (Li) is a component for reducing a weight of the magnesium alloy and having a function of improving its plastic workability. In consideration of achievement of the moldability during injection molding and others while ensuring the above-described function, a feature of the present embodiment is to bring contents in the magnesium-lithium-aluminum based alloy to 2 to 6.0% in unit of mass% (hereinafter also simply referred to as "%", and "%" representing mass% unless otherwise specified in this specification). The lower limit value of the lithium content is preferably set to 4.8% or more. Also, the upper limit value of the same is preferably set to 5.8% or less.

When the lithium content exceeds 6.0%, it is considered that the β-phase (Li) is likely to be crystallized out. For the plastic working such as rolling and extrusion on the magnesium-lithium-aluminum based alloy, the presence of the β-phase is preferable in order to improve the workability. Note that an equilibrium phase diagram of a simple Mg-Li based alloy shows that the β-phase is crystallized out when the lithium content exceeds 5.7%. However, the phase diagram may change if other alloy components such as Al and Zn are contained, and a perfect equilibrium state cannot be made under a casting method with a rapid cooling rate such as injection molding. Therefore, in the composition of the present embodiment, the β-phase is less likely to be crystallized out even when the content exceeds 5.7%, and this point has been confirmed in practice.

On the other hand, when application to working by the casting method is assumed, the magnesium-lithium β-phase is unnecessary during the working, and besides, the β-phase becomes a risk of a cause of deterioration in productivity because of, for example, being easy to adhere to a screw in the case of injection molding and be stuck to and remain in a mold.

Also, when the lithium content is less than 2%, the effect of the weight reduction on the magnesium alloy is hardly obtained. In order to achieve the sufficient weight reduction, lithium of 4% or more is preferably contained.

### (Aluminum)

Aluminum (Al) is a component that acts to provide good flowability of the alloy material until an eutectic compound with magnesium or calcium (Ca) is formed, because of being hardly dissolved in the magnesium matrix and being concentrated in the outermost solidification surface of the primary magnesium crystal.

The aluminum content is preferably 5 to 10% in the alloy. Aluminum also has a function of lowering a melting point of the alloy material, but does not sufficiently lower the melting point when the content is less than 5%, and therefore, a dissolution temperature of the alloy material needs to be high during alloy melting or casting, and this causes a risk of reduction of the workability. In addition, when the aluminum content exceeds 10%, intermetallic compounds increase, and therefore, there are tendencies of increase of the susceptibility to casting crack and deterioration of the corrosion resistance. Therefore, the aluminum content is preferably 5% or more from the viewpoint of preventing occurrence of defects during casting or the like and the viewpoint of preventing failure in the corrosion resistance.

### (Zinc)

Zinc (Zn) is an optional component serving as a component that improves strength. Zinc can improve the castability (moldability) of the alloy, but decreases creep resistance and increases the susceptibility to casting crack. The zinc content is set to 1% or less in the alloy, or may not be contained therein. If zinc is contained, its content is preferably 0.35 to 1%.

### (Manganese)

Manganese (Mn) is a component that is chemically mixed with aluminum to form an intermetallic compound to suppress the deterioration of the corrosion resistance when iron (Fe) which is an impurity element is solid-solved in the intermetallic compound. Manganese is an optional component. If manganese is contained, its content is preferably 0.15 to 0.8%. If the content is less than 0.15%, the above-described function cannot be sufficiently provided. If the content exceeds 0.8%, there is a risk of deterioration of the dissolution yield.

### (Others)

Magnesium is the main component of the magnesium-lithium-aluminum based alloy in the present embodiment, and the remainder of the component described above is basically magnesium. However, other components can be contained within a range not impairing the effects of the present invention. As such a component, for example, an unavoidable impurity that is inevitably contained in the alloy manufacture can be exemplified.

As such an unavoidable impurity, specifically, iron, copper, nickel or the like can be exemplified. Such an unavoidable impurity is preferably substantially not contained in the magnesium-lithium-aluminum based alloy, and the phrase "substantially not contained" means that the iron content in the alloy is 0.03% or less, the copper content therein is 0.25% or less, and the nickel content therein is 0.01% or less.

### (Content Ratio between Lithium and Aluminum)

Also, as a feature of the magnesium-lithium-aluminum based alloy in the present embodiment, each mix amount satisfies the above-described ranges. However, furthermore, it is also preferable to adjust the lithium content and aluminum content to have a predetermined ratio.

Most of the publicly-known existing magnesium-lithium-aluminum based alloys are alloys in which aluminum is equal to or more than lithium in unit of mass%. However, in the present embodiment, in order to prevent the crystallization of the lithium-derived β-phase, the lithium content is preferably decreased while the aluminum content is preferably set to an amount necessary for improving the mechanical properties and the corrosion resistance. That is, when the lithium content and the aluminum content are put in a predetermined relationship, the relationship can provide the alloy in which the moldability is improved while the weight reduction is achieved, and besides, in which the mechanical properties and the corrosion resistance are secured.

As the above-described predetermined ratio, specifically, the ratio between the lithium content and the aluminum content (Li/Al) is preferably in a range of 0.5 to 0.9, and more preferably a range of 0.5 to 0.85.

Note that lithium has a small atomic weight, and therefore, the ratio "Li/Al" in unit of mass% is 0.5 to 0.9, and the ratio "Li/Al" in unit of atomic% is about 2. For example, an alloy of "4 mass% Li - 8 mass% Al - 88 mass% Mg" is equivalent to an alloy of "12.83 atomic% Li - 6.6 atomic% Al - 80.58 atomic% Mg" (Here, regarding the notation of the alloy composition, a numerical value put before an element represents a content of this element in the alloy. If the magnesium content is omitted, the remainder of the described element content is magnesium). According to the ternary phase diagram of the material containing these three components in the publicly-known document, the α-phase of magnesium spreads within an alloy range containing lithium more than aluminum from a point of magnesium of 100%. That is, when a large amount of the lithium and the aluminum are contained within this spreading range of the α-phase, and are solid-solved as much as possible by rapid cooling in the injection molding, the alloy composition can be adjusted not to crystallize the β-phase, and this is one of means to improve the mechanical properties and the corrosion resistance.

Specifically, in the embodiment, the metallographic structure in the alloy is made of the α-Mg with Li dissolved and the Al-Li intermetallic compound. On the other hand, the β-phase (Mg₁₇Al₁₂) and the β-phase (Li) can be reduced, or be hardly contained. By the reduction of the β-phase as described above, the influence (particularly the adhesion to the mold in the injection molding) on the desired properties can be eliminated.

### [Method of Manufacturing Magnesium-Lithium-Aluminum based Alloy]

A method of manufacturing the magnesium-lithium-aluminum based alloy of the present embodiment can be achieved by preparing raw materials to be magnesium, lithium, aluminum, and other components to have the above-described composition, and mixing these raw materials by a publicly-known method.

As the raw materials to be used in this case, powdered raw material chip is preferably used. As the raw material chip, the raw material chip having a suitable size for the manufacturing method can be used, and the raw material chip that can be easily heated, melted, and mixed are preferable. As the raw material chip, for example, a raw material chip with an average particle diameter of 0.5 to 2.5 mm is preferable, and a raw material chip with an average particle diameter of 1.0 to 2.0 mm is more preferable.

One example of the method of manufacturing this alloy is a method of, for example, (a1) preparing a first raw material chip made of a magnesium-aluminum based alloy containing magnesium, 5 to 10 mass% aluminum and 0 to 1 mass% zinc, and a second raw material chip made of a magnesium-lithium based alloy containing magnesium and lithium, then, (b1) mixing the first raw material chip and the second raw material chip to provide a magnesium-lithium-aluminum based alloy containing magnesium, 2 to 6.0 mass% lithium, and 5 to 10 mass% aluminum.

Another example of the method of manufacturing this alloy is a method of, for example, (a2) preparing a third raw material chip made of a magnesium-lithium-aluminum based alloy containing magnesium, lithium, and aluminum, where the ratio between the lithium content and the aluminum content (Li/Al) is smaller than 8, and a fourth raw material chip made of a magnesium alloy that does not contain lithium, then, (b2) mixing the third raw material chip and the fourth raw material chip to provide a magnesium-lithium-aluminum based alloy containing magnesium, 2 to 6.0 mass% lithium, and 5 to 10% mass% aluminum.

As the first through fourth raw material chips described above, commercially-available raw material chips may be used, or the raw material chips may be prepared to have a specific mix composition.

### [Method of Manufacturing Molded Product made of Magnesium-Lithium-Aluminum based Alloy]

A method of manufacturing the molded product is a method of providing the molded product by a casting method or the like using a molding die for the alloy material provided by the above-described alloy manufacturing method. As the casting method to be performed in this case, various publicly-known methods can be employed, high-pressure casting methods such as injection molding, die casting, squeeze casting, and metal injection molding method are exemplified, and the alloy material described above is a suitable material for the high-pressure casting methods. Although not particularly limited, as the conditions for such a casting method, the injection molding that does not need to melt the alloy in the atmosphere is more preferable because of the magnesium alloy containing lithium which is ignitable. In the injection molding, the molding under not a fully melted state but a semi-melted state is also possible.

In the high-pressure casting method described above, since the molten alloy (including the case of semi-molten alloy) has high fluidity, the casting with good melt flow can be achieved even in molding of a thin product, and a complicated-shape product that cannot be molded by rolling or extrusion can be molded by near-net-shape molding, and therefore, high product yield can be provided. In addition, the provided member is ensured of excellent properties.

The case using the injection molding will be explained in detail as an example below. One example of the method of manufacturing the molded product is a method of, for example, (a1) preparing a first raw material chip made of a magnesium-aluminum based alloy containing magnesium, 5 to 10 mass% aluminum and 0 to 1 mass% zinc, and a second raw material chip made of a magnesium-lithium based alloy containing magnesium and lithium, and (b1) mixing the first raw material chip and the second raw material chip to provide a magnesium-lithium-aluminum based alloy containing magnesium, 2 to 6.0 mass% lithium and 5 to 10 mass% aluminum, and then, (c1) injection-molding the magnesium-lithium-aluminum based alloy provided in the step (b1) described above.

Another example of the method of manufacturing the molded product is a method of, for example, (a2) preparing a third raw material chip made of a magnesium-lithium-aluminum based alloy containing magnesium, lithium, and aluminum, where the ratio between the lithium content and the aluminum content (Li/Al) is smaller than 8, and a fourth raw material chip made of a magnesium alloy that does not contain lithium, and (b2) mixing the third raw material chip and the fourth raw material chip to provide a magnesium-lithium-aluminum based alloy containing magnesium, 2 to 6.0 mass% lithium, and 5 to 10% mass% aluminum, and then, (c2) injection-molding the magnesium-lithium-aluminum based alloy provided in the step (b2) described above.

Each exemplified method of manufacturing the molded product is obtained by adding the step (c1) or (c2) to the above-described alloy manufacturing method, and all methods provide the molded product by the injection molding. Here, the injection molding can be achieved by a publicly-known method. As a feature of the method of manufacturing the molded product, two types of raw material chips are mixed. In the case of using two types of raw material chips, it is sufficient to previously separate the two types of raw material chips at the desired mass ratio and mix them in a single container, or to prepare two hoppers used to feed the raw material chips for the respective raw material chips and feed a predetermined amount of each raw material chip from each hopper to achieve a predetermined composition. In the case of using one or more hoppers to feed the two types of raw material chips, the respective feeders for feeding the raw material chips are prepared, and the raw material chips are fed to achieve the desired mixing mass ratio.

When the molded product is provided by the injection molding, a melting furnace as used in the die casting is not used, and therefore, the risk of burning of the lithium-containing magnesium alloy that is easily flammable can be extremely reduced.

In addition, for example, a high-lithium-containing magnesium alloy such as Mg-14%Li-1%Al (LA141) has a narrow semi-melting temperature range, and therefore, may be rapidly melted during transportation by a screw when being molded by the injection molding, and may be unstably molded. Since the lithium amount can be made lower than this, the semi-melting temperature range can be widened to improve the molding stability. Furthermore, for example, even when Mg-7%Li-7%Al-1%Zn (LAZ771) which is a lithium-containing magnesium alloy with poor molding stability is used as the raw material, this raw material is mixed and injection-molded with a generally-used AZ91D (Mg-9%Al-1%Zn) chip which causes the molding stability to improve the molding stability and easily adjust the mix ratio, and therefore, a molded product of a desired alloy composition can be provided by simple operation.

The molded products provided by the method of manufacturing the molded product according to the present embodiment can be used as lightweight, high-strength, and corrosion-resistant members in various applications. Therefore, the increase in the use amount of the molded products can be expected for automotive parts and various portable devices where these properties are required. Moreover, these magnesium alloy products are more recyclable than plastic products, and can contribute to the preservation of the global environment.

The magnesium-lithium-aluminum based alloy, the method of manufacturing the same, and the method of manufacturing the molded product according to the present embodiment have been described above. The magnesium-lithium-aluminum based alloy provided as described above have the following advantages.
(1) Lithium is extremely expensive to cost 6,000 to 10,000 Japanese yen/kg, which is more than 10 times the raw material price of magnesium and aluminum, costing around 200 to 300 Japanese yen/kg. Therefore, the more the contained lithium is, the higher the alloy price is. However, because of the magnesium-lithium-aluminum based alloy according to the above-described embodiment, the lithium amount can be suppressed, and the manufacturing cost can be suppressed.
(2) Magnesium has a very low corrosion potential and is less corrosion resistant than iron and aluminum. Lithium has an even lower corrosion potential than magnesium and is an active metal. Therefore, the increase in the lithium amount further deteriorates the corrosion resistance of the magnesium alloy. Because of the magnesium-lithium-aluminum based alloy according to the above-described embodiment, the lithium amount can be suppressed, and the corrosion resistance can be improved.
(3) Magnesium is an active metal, and therefore, burns along with a strong flash of light when being dissolved in the atmosphere. In addition, there is a possibility of dust explosion if its fine powder generated by machining or the like is not properly processed and thus is ignited in the atmosphere. Lithium is an even more active metal than magnesium, and is more combustible when a large amount of lithium is added to magnesium, to increase danger. Because of the magnesium-lithium-aluminum based alloy according to the above-described embodiment, the lithium amount can be suppressed, and the flammability of the magnesium-lithium-aluminum based alloy can be improved.
(4) The Mg-Li based alloy has a very small temperature difference between the solidus line and liquidus line in the phase diagram and a narrow solid-liquid coexistence temperature range, and therefore, rapidly melts in a narrow temperature range when being heated. Therefore, the injection molding that melts the alloy while transporting the alloy by the screw makes the melting behavior unstable, and it is difficult to perform the injection molding. In addition, a magnesium alloy chip containing lithium of about 5.7 mass% or more has the β-phase with the bcc structure, and therefore, easily plastically flows, and is difficult to be molded when being transported by the rotating screw because of sticking to the screw or the like. Since the solid-liquid coexistence temperature range is narrow, solidification cracks easily occur in the casting method. In this regard, according to the above-described embodiment, the solid-liquid coexistence temperature range can be widened, and injection moldability can be improved.

### Working Examples

The magnesium-lithium-aluminum based alloy of the present embodiment, the method of manufacturing the same, and the method of manufacturing the molded product made of the alloy will be described in detail below, with reference to working examples and comparative examples.

### (Working Examples 1 to 5, Comparative Examples 1 to 2)

As the raw material chips, LAZ771 (Mg-7%Li-7%Al-1%Zn; manufactured by AMLI MATERIALS TECHNOLOGY CO., LTD. (Taiwan)) and AZ91D (Mg-9%Al-0.7%Zn; manufactured by CHUO-KOSAN., LTD.) was prepared.

As cylinder temperature setting, 723 K was set for the hopper to which the chip is fed while 873 K was set for the melting part at the tip under use of an injection molding machine for magnesium alloys manufactured by The Japan Steel Works, LTD., (trade name: JLM280MGIIe, clamping force: 2740 kN, cylinder inner diameter: 51 mm) .

The raw material chips, LAZ771 and AZ91D, were fed into the hopper so as to have a predetermined mix ratio shown in Table 1, and were injection-molded into the mold (mold temperature setting: 473 K) to provide, as a molded body, a 100-mm-wide, 200-mm-long, and 2-mm-thick flat plate made of the magnesium-lithium-aluminum based alloy. The element contents in the alloy of the provided molded body is shown in Table 1.

### [Table 1]

**Table 1**

| | Mix ratio of LAZ771 (mass%) | Element content in alloy (mass%) | | | | Content ratio between Li and Al (Li/Al) | Density (kg/cm³) |
|---|---|---|---|---|---|---|---|
| | | Mg | Li | Al | Zn | | |
| Comparative example 1 | 0 | 90.3 | 0.0 | 9.0 | 0.7 | 0.00 | 1807 |
| Working example 1 | 40 | 88.2 | 2.9 | 8.1 | 0.8 | 0.36 | 1687 |
| Working example 2 | 50 | 87.7 | 3.6 | 7.9 | 0.8 | 0.46 | 1659 |
| Working example 3 | 60 | 87.2 | 4.4 | 7.7 | 0.8 | 0.57 | 1632 |
| Working example 4 | 70 | 86.7 | 5.1 | 7.5 | 0.8 | 0.68 | 1606 |
| Working example 5 | 80 | 86.1 | 5.8 | 7.2 | 0.8 | 0.81 | 1581 |
| Comparative example 2 | 100 | 85.1 | 7.3 | 6.8 | 0.8 | 1.07 | 1533 |

### [Properties]

On the above-described provided alloy, a tensile test (tensile strength, fracture elongation, proof stress, and Young's modulus) and XRD measurement were performed as follows.

### (Tensile Test)

From the plate-shaped molded product provided in each example, a dumbbell-shaped No. 13B test piece conforming to JIS was cut out, and was used as a sample.

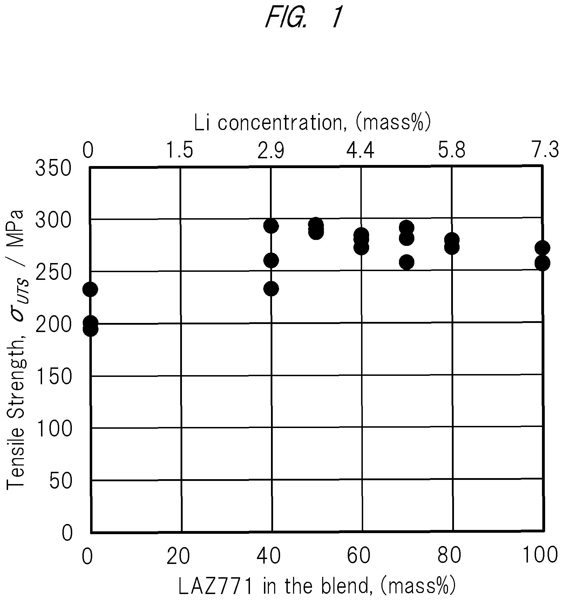

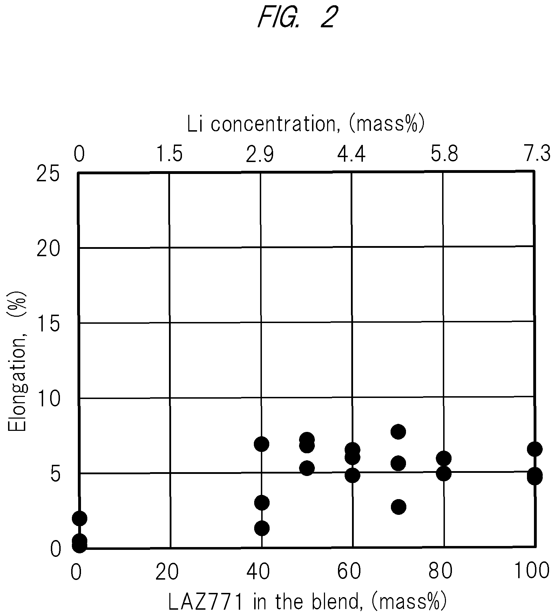

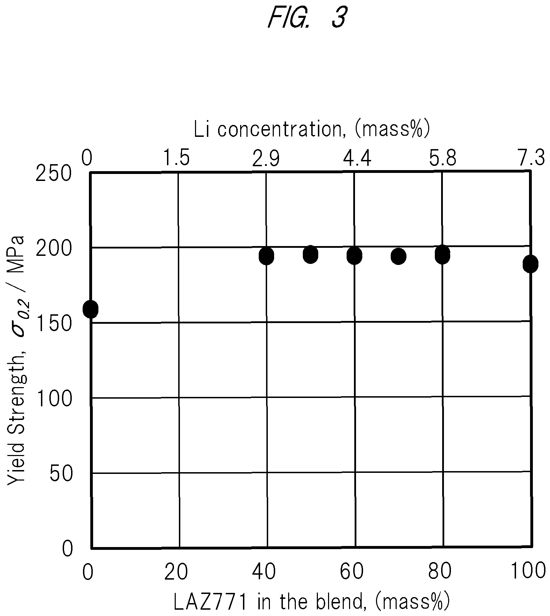

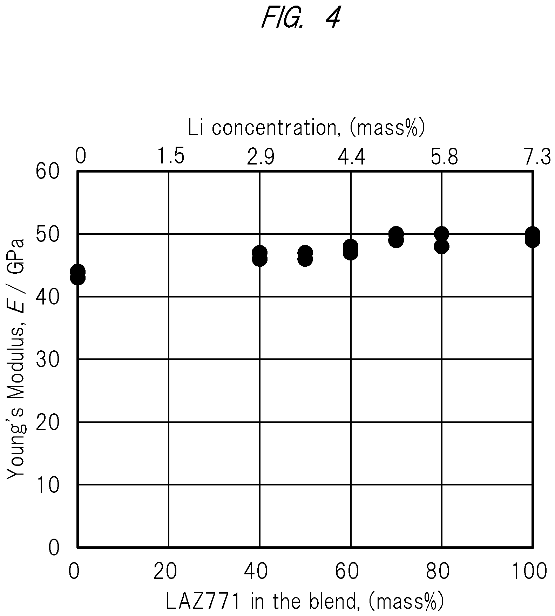

On each of the provided samples, the tensile test using an INSTRON5982-type tensile testing machine was performed at a test speed of 10 MPa/s (the test speed after the proof stress test was set to 11.4 mm/min). In this test, values were measured at three points on the operation side, the center, and the opposite side of the operation side of the sample, and the values of each measurement point and its average value were calculated for the tensile strength, the fracture elongation, the proof stress, and the Young's modulus. The results are summarized in tables and drawings. Note that the tensile strength is shown in Table 2 and FIG. 1, the fracture elongation is shown in Table 3 and FIG. 2, the proof stress is shown in Table 4 and FIG. 3, and the Young's modulus is shown in Table 5 and FIG. 4.

### (Corrosion Resistance)

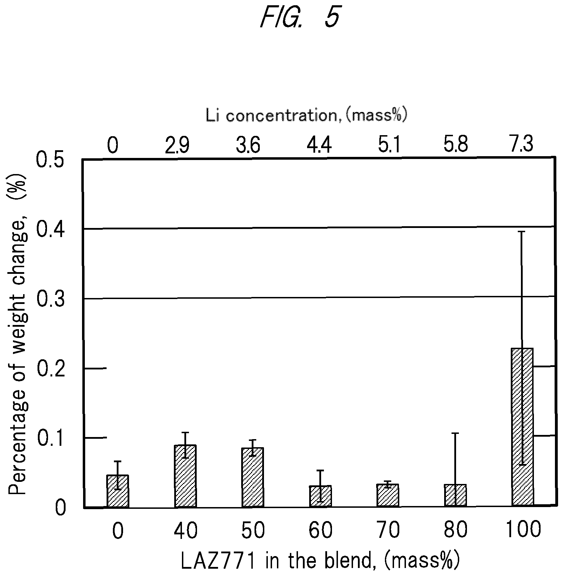

Salt water of 5% was prepared, was sprayed on the above-described samples, and was left at 35°C for 24 hours. The mass of each sample was measured before and after the test, and the percentage (%) of the mass change was calculated. The test results are shown in Table 6 and FIG. 5. Generally, it is said that the less the corrosion loss is, the better the corrosion resistance is. However, in this working example, removal of a corrosion product under use of hydrofluoric acid was not performed due to safety issues, and the results show that the more the corrosion product is, in other words, the larger the corrosion gain is, the worse the corrosion resistance is. The less the corrosion gain is, the better the corrosion resistance is .

### (XRD)

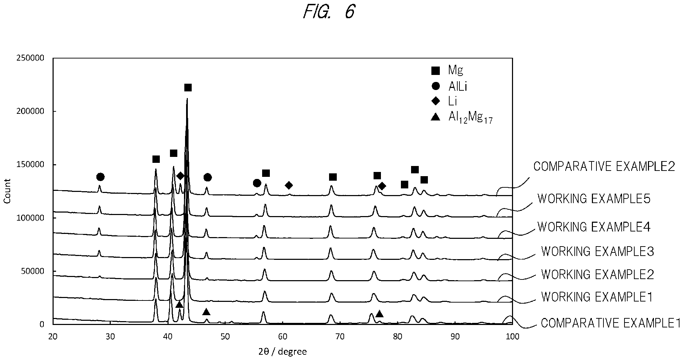

The crystals contained in the molded product provided in each case were measured by an X-ray diffraction method. Under use of a multi-purpose X-ray diffractometer "Empyrean" (manufactured by Spectris Co., Ltd., trade name) as the X-ray diffractometer, the measurements were performed at target: Co, tube voltage: 45 kV, and tube current: 40 mA. The provided diffraction pattern is shown in FIG. 6.

In addition, note that FIG. 6 collectively shows the results of the working examples 1 to 5 and the comparative examples 1 to 2. Regarding the crystals corresponding to the respective peaks, a symbol is illustrated on an upper side of each peak, and the crystals indicated by the respective symbols are collectively shown on an upper right side of the graph.

### [Table 2]

**Table 2**

| | Mix ratio of LAZ771 (mass%) | Tensile strength (Mpa) | | | |
|---|---|---|---|---|---|
| | | Operation side | Center | Opposite to operation side | Average |
| Comparative example 1 | 0 | 233 | 195 | 201 | 210 |
| Working example 1 | 40 | 260 | 293 | 233 | 262 |
| Working example 2 | 50 | 290 | 294 | 287 | 290 |
| Working example 3 | 60 | 280 | 284 | 272 | 279 |
| Working example 4 | 70 | 291 | 258 | 281 | 277 |
| Working example 5 | 80 | 279 | 272 | 279 | 277 |
| Comparative example 2 | 100 | 256 | 257 | 271 | 261 |

### [Table 3]

**Table 3**

| | Mix ratio of LAZ771 (mass%) | Fracture elongation (%) | | | |
|---|---|---|---|---|---|
| | | Operation side | Center | Opposite to operation side | Average |
| Comparative example 1 | 0 | 2.0 | 0.2 | 0.5 | 0.9 |
| Working example 1 | 40 | 3.0 | 6.9 | 1.3 | 3.7 |
| Working example 2 | 50 | 6.8 | 7.2 | 5.3 | 6.4 |
| Working example 3 | 60 | 6.0 | 6.5 | 4.8 | 5.8 |
| Working example 4 | 70 | 7.7 | 2.7 | 5.6 | 5.3 |
| Working example 5 | 80 | 4.9 | 4.9 | 5.9 | 5.2 |
| Comparative example 2 | 100 | 4.6 | 4.8 | 6.5 | 5.3 |

### [Table 4]

**Table 4**

| | Mix ratio of LAZ771 (mass%) | Proof stress (MPa) | | | |
|---|---|---|---|---|---|
| | | Operation side | Center | Opposite to operation side | Average |
| Comparative example 1 | 0 | 160 | 158 | 159 | 159 |
| Working example 1 | 40 | 193 | 195 | 195 | 194 |
| Working example 2 | 50 | 194 | 195 | 196 | 195 |
| Working example 3 | 60 | 193 | 195 | 195 | 194 |
| Working example 4 | 70 | 194 | 193 | 194 | 194 |
| Working example 5 | 80 | 193 | 194 | 196 | 194 |
| Comparative example 2 | 100 | 189 | 187 | 188 | 188 |

### [Table 5]

**Table 5**

| | Mix ratio of LAZ771 (mass%) | Young's modulus (GPa) | | | |
|---|---|---|---|---|---|
| | | Operation side | Center | Opposite to operation side | Average |
| Comparative example 1 | 0 | 44 | 44 | 43 | 44 |
| Working example 1 | 40 | 46 | 46 | 47 | 46 |
| Working example 2 | 50 | 46 | 47 | 46 | 46 |
| Working example 3 | 60 | 48 | 48 | 47 | 48 |
| Working example 4 | 70 | 50 | 49 | 49 | 49 |
| Working example 5 | 80 | 48 | 50 | 48 | 49 |
| Comparative example 2 | 100 | 49 | 50 | 50 | 50 |

### [Table 6]

**Table 6**

| | Mix ratio of LAZ771 (mass%) | Mass change (%) | | | |
|---|---|---|---|---|---|
| | | Sample 1 | Sample 2 | Sample 3 | Average |
| Comparative example 1 | 0 | 0.068 | 0.039 | 0.030 | 0.046 |
| Working example 1 | 40 | 0.076 | 0.080 | 0.110 | 0.088 |
| Working example 2 | 50 | 0.073 | 0.084 | 0.096 | 0.084 |
| Working example 3 | 60 | 0.028 | 0.052 | 0.008 | 0.029 |
| Working example 4 | 10 | 0.031 | 0.026 | 0.036 | 0.031 |
| Working example 5 | 80 | 0.066 | -0.054 | 0.079 | 0.031 |
| Comparative example 2 | 100 | 0.141 | 0.117 | 0.419 | 0.226 |

The above-described results show that the use of 40%LA2771 (Mg-2.9%Li-8.1%Al-0.8%Zn) significantly improved the strength of the magnesium-lithium-aluminum based alloy of the present embodiment more than the use of the alloy of AZ91D alone (0%LAZ771), and maintains the almost same strength as those under the uses of 50%LAZ771, 60%LAZ771, 70%LAZ771, and 80%LAZ771. However, the use of LAZ771 alone (100%LAZ771) tends to slightly decrease the strength. In consideration of the publicly-known results provided from the molding by the mixture of LA141 (Mg-14%Li-1%Al) which has a high lithium content and AZ91D, it has been found that the strength tends to be increased by the lithium content of about 2 to 6%. The same tendency was observed at 0.2% proof stress.

Furthermore, it has been found that the Young's modulus which is important for rigidity design increases in an order from the use of the alloy of AZ91D alone (0% LAZ771) to 40% LAZ771, and then, gradually increases in an order therefrom to 80% LAZ771. Also, there is a tendency of no increase in the Young's modulus even under the further use of the LAZ771. Generally, the Young's modulus of a metal does not change much depending on the alloy components. Therefore, in order to increase the rigidity, it is necessary to manufacture a metal matrix composite material mixed with inorganic particles, fibers or the like. However, it is difficult to manufacture the composite material, and besides, the composite material is high in cost and is unstable in quality. Meanwhile, the increase in the Young's modulus by the addition of the predetermined amount of LAZ771 is new finding, and, from this finding, the present inventors have found that the magnesium-lithium-aluminum based alloy that provides the stable rigidity can be achieved by the present embodiment.

In addition, from the XRD analysis results of the molded product, it has been found that the molded product in the present embodiment includes the α-phase (Mg) and AlLi which is the intermetallic compound phase. From this, it is clear that AlLi contributes significantly to the improvement of the Young's modulus, and it can be said that the feature of the molded product is to include the α-phase and the AlLi phase.

In the case of 100% LAZ771 described in the Patent Document 1, the β-phase was detected in addition to the α-phase by the XRD analysis. In alloys with a small amount of Al to which lithium of 5.7% or more is added, not the AlLi but the β-phase (Li) is generated as a result of the increase in the lithium amount, and it is considered that the Young's modulus is not improved anymore. Accordingly, it has been found that it is important to adjust the components so as to generate not the AlLi but the β-phase for improving the mechanical properties.

In addition, it is generally said that the corrosion resistance of the lithium-containing magnesium alloy is poor. However, when a salt-water spray test was performed to the provided molded product, the corrosion resistance of 100% LAZ771 was also poor, but was made better than that of AZ91D (0% LAZ771) by mixture of LAZ771 of 60 to 80%. A reason for this is unclear. However, it is considerable that not crystallizing out the β-phase (Li) and crystallizing out the AlLi phase are effective even for improving the corrosion resistance.

As described above, when lithium is added until the β-phase is crystallized out, the specific gravity becomes lighter, but the corrosion resistance deteriorates or the improvement of the mechanical properties cannot be expected. On the other hand, it is revealed that the lithium-containing magnesium alloy containing the less but appropriate lithium amount and including not the β-phase but the AlLi phase instead has the lighter specific gravity and the improved mechanical properties and corrosion resistance in comparison to the magnesium alloy not containing lithium, and it is considerable that this material is the appropriate material for the weight reduction of parts.

In the foregoing, the invention made by the inventors of the present application has been concretely described on the basis of the embodiments and the working examples. However, it is needless to say that the present invention is not limited to the foregoing embodiments and working examples, and various modifications can be made within the scope of the present invention.

## Claims

1. A magnesium-lithium-aluminum based alloy containing:
magnesium;
lithium of 2 to 6.0 mass%; and
aluminum of 5 to 10 mass%.

2. The magnesium-lithium-aluminum based alloy according to claim 1, further containing:
zinc of 0.35 to 1 mass%; and
manganese of 0.15 to 0.8 mass%.

3. The magnesium-lithium-aluminum based alloy according to claim 1,
wherein a ratio between a content of the lithium and a content of the aluminum (Li/Al) is 0.5 to 0.9.

4. The magnesium-lithium-aluminum based alloy according to claim 2,
wherein the lithium is lithium of 4.8 to 6.0 mass%.

5. The magnesium-lithium-aluminum based alloy according to claim 1,
wherein a metallographic structure of the magnesium-lithium-aluminum based alloy is made of α-Mg in which Li is solid-solved and an Al-Li intermetallic compound, and does not include β-phase (Mg₁₇Al₁₂) and β-phase (Li) .

6. A method of manufacturing a magnesium-lithium-aluminum based alloy, comprising steps of:
(a1) preparing a first raw material chip made of a magnesium-aluminum based alloy containing magnesium, aluminum of 5 to 10 mass%, and zinc of 0 to 1 mass%, and a second raw material chip made of a magnesium-lithium based alloy containing magnesium and lithium; and
(b1) mixing the first raw material chip and the second raw material chip to provide a magnesium-lithium-aluminum based alloy containing magnesium, lithium of 2 to 6.0 mass%, and aluminum of 5 to 10 mass%.

7. A method of manufacturing a magnesium-lithium-aluminum based alloy, comprising steps of:
(a2) preparing a third raw material chip made of a magnesium-lithium-aluminum based alloy containing magnesium, lithium, and aluminum, in which a ratio between a content of the lithium and a content of the aluminum (Li/Al) is smaller than 8, and a fourth raw material chip made of a magnesium alloy not containing lithium; and
(b2) mixing the third raw material chip and the fourth raw material chip to provide a magnesium-lithium-aluminum based alloy containing magnesium, lithium of 2 to 6.0 mass%, and aluminum of 5 to 10% mass%.

8. A method of manufacturing a molded product made of a magnesium-lithium-aluminum based alloy, comprising steps of:
(a1) preparing a first raw material chip made of a magnesium-aluminum based alloy containing magnesium, aluminum of 5 to 10 mass%, and zinc of 0 to 1 mass% and a second raw material chip made of a magnesium-lithium based alloy containing magnesium and lithium;
(b1) mixing the first raw material chip and the second raw material chip to provide a magnesium-lithium-aluminum based alloy containing magnesium, lithium of 2 to 6.0 mass%, and aluminum of 5 to 10 mass%; and
(c1) injection-molding the magnesium-lithium-aluminum based alloy provided in the step (b1).

9. A method of manufacturing a molded product made of a magnesium-lithium-aluminum based alloy, comprising steps of:
(a2) preparing a third raw material chip made of a magnesium-lithium-aluminum based alloy containing magnesium, lithium, and aluminum, in which a ratio between a content of the lithium and a content of the aluminum (Li/Al) is smaller than 8, and a fourth raw material chip made of a magnesium alloy not containing lithium;
(b2) mixing the third raw material chip and the fourth raw material chip to provide a magnesium-lithium-aluminum based alloy containing magnesium, lithium of 2 to 6.0 mass%, and aluminum of 5 to 10% mass%; and
(c2) injection-molding the magnesium-lithium-aluminum based alloy provided in the step (b2).
